# EUROPÄISCHE PATENTSCHRIFT

(11) **EP 3 123 856 B1**
(45) Veröffentlichungstag und Bekanntmachung des Hinweises auf die Patenterteilung: **25.12.2019**
(21) Anmeldenummer: 16170508.2
(22) Anmeldetag: 20.05.2016
(51) Int. Cl.: A01F 15/07

(54) **PRESS-WICKELKOMBINATION ZUM PRESSEN UND UMHÜLLEN VON RUNDBALLEN**
PRESS-WRAP COMBINATION FOR PRESSING AND WRAPPING ROUND BALES
COMBINAISON DE PRESSE-ENROULEUSE POUR LA COMPRESSION ET L'ENVELOPPEMENT DE BALLES RONDES

(30) Priorität: 27.07.2015 DE 102015112218
(43) Veröffentlichungstag der Anmeldung: 01.02.2017
(73) Patentinhaber: Usines Claas France S.A.S, 57140 St. Rémy / Woippy (FR)
(72) Erfinder: Cazaban-Mazerolles, Benoit, 57070 Chieulles (FR); Scharf, Thorsten, 66693 Mettlach (DE)
(74) Vertreter: CLAAS Gruppe

(56) Entgegenhaltungen:
- EP-A1- 2 106 688
- EP-A1- 2 870 856
- WO-A1-98/41450
- WO-A1-2015/035375

## Beschreibung

Die Erfindung betrifft eine Ballenwickelvorrichtung für eine Ballenpresse, insbesondere für eine Rundballenpresse, zum Umhüllen von Ballen, insbesondere aus Erntegut, welche einen Wickeltisch sowie wenigstens einen bahnförmiges Wickelmaterial tragenden Wickelarm zum Umhüllen des Ballens mit Wickelmaterial aufweist, wobei der Wickeltisch und/oder der wenigstens eine Wickelarm um eine Ebene des Rundballens rotierend antreibbar sind.

Weiterhin betrifft die Erfindung ein Verfahren zum Betreiben einer Ballenwickelvorrichtung für eine Ballenpresse, insbesondere für eine Rundballenpresse, zum Umhüllen von Ballen, insbesondere aus Erntegut, welche einen Wickeltisch sowie wenigstens einen Wickelarm aufweist und den Ballen mit bahnförmigem Wickelmaterial umhüllt, wozu der Wickeltisch und/oder der wenigstens eine Wickelarm um eine Ebene des Rundballens rotierend angetrieben werden.

Eine Ballenwickelvorrichtung für eine Ballenpresse der eingangs genannten Art wird üblicherweise zusammen mit der Ballenpresse von einem Zugfahrzeug, beispielsweise einem Schlepper, über ein Feld zur Aufnahme von in Schwadform abgelegtem Erntegut gezogen. Die Arbeitsorgane der Ballenpresse und der Ballenwickelvorrichtung, die auch als Press-Wickelkombination bezeichnet werden, werden mittels einer am Schlepper befindlichen Zapfwelle von diesem angetrieben. Das von der Press-Wickelkombination kontinuierlich aufgenommene Erntegut wird in einer Presskammer beispielsweise einer Rundballenpresse durch am Umfang der Presskammer angeordnete Riemen und/oder Rollen aufgerollt und durch Pressen zu einem Rundballen verdichtet. Bei dem Erntegut kann es sich unter anderem um Heu, Stroh oder teilweise getrocknetes Gras handeln, welches im Zuge eines Fermentierungsprozesses zu Silage umgewandelt wird. Um den fertigen Rundballen vor äußeren Einflüssen zu schützen beziehungsweise den Fermentierungsprozess zu ermöglichen, ist ein im Wesentlichen luft- und flüssigkeitsdichter Einschluss des Erntegutes erforderlich. Dies wird durch das Umhüllen des Rundballens mit einem bahnförmigen Wickelmaterial erreicht. Zum Umwickeln wird der Rundballen von der Presskammer an einen Wickeltisch übergeben. Der Wickeltisch ist Teil einer Ballenwickelvorrichtung, welche zudem mehrere Wickelarme umfasst, welche jeweils eine Rolle mit dem Wickelmaterial tragen. Das Einwickeln des Ballens erfolgt durch das Drehen des Ballens mittels des Wickeltisches um eine Achse sowie das Drehen der Wickelarme senkrecht hierzu.

Aus dem Stand der Technik sind Ballenpressen mit einer entsprechenden Wickelvorrichtung bekannt, beispielsweise aus der EP 2 870 856 A1, der WO 98/41450 A1 oder der EP 2 106 688 A1. Hierbei erfolgt das Umwickeln des fertig gepressten Ballens mit einem Wickelmaterial jeweils außerhalb der Presskammer der Ballenpresse.

Eine Ballenwickelvorrichtung für eine Ballenpresse, insbesondere Rundballenpresse, zum Umhüllen von Rundballen sowie ein Verfahren zum Betreiben einer Ballenwickelvorrichtung der vorgenannten Gattung sind aus der EP 2 033 894 A1 bekannt. Hierbei wird der fertig gepresste Rundballen auf einem Wickeltisch derart abgelegt, dass der Rundballen im Wesentlichen in der senkrechten Rotationsachse einer zweiarmigen Wickelvorrichtung angeordnet ist. Die beiden Wickelarme tragen jeweils eine daran angeordnete Rolle mit bahnförmigem Wickelmaterial. Durch die Rotation der beiden Wickelarme in einer Ebene um den auf dem Wickeltisch abgelegten Rundballen herum wird dieser mit dem Wickelmaterial beider Rollen gleichzeitig umwickelt. Der Antrieb der rotierenden Wickelarme erfolgt dabei mit konstanter Geschwindigkeit. Durch eine Rotation des Rundballens um seine Drehachse mittels des Wickeltisches wird ein vollständiges Einwickeln des Rundballens mit dem Wickelmaterial erreicht. Tritt beim Einwickeln des Rundballens ein unvorhergesehenes Ereignis, wie das Ende des Wickelmaterials auf einer der Rollen oder das Reißen des Wickelmaterials beim Abziehen von einer Rolle, auf, so führt dies dazu, dass sich die Dauer des Wickelprozesses erheblich verlängert, da nunmehr lediglich von einem Wickelarm Wickelmaterial abgewickelt wird.

Der Erfindung liegt die Aufgabe zugrunde, eine Ballenwickelvorrichtung sowie ein Verfahren zum Betreiben einer Ballenwickelvorrichtung derart weiterzuentwickeln, dass ein Auftreten von unvorhergesehen, die Wickeldauer beeinflussenden Ereignissen nicht zu einer signifikanten Verlängerung der Wickeldauer führt.

Diese Aufgabe wird erfindungsgemäß durch eine Ballenwickelvorrichtung gemäß dem Anspruch 1 sowie durch ein Verfahren zum Betreiben einer Ballenwickelvorrichtung gemäß dem nebengeordneten Anspruch 9 gelöst. Vorteilhafte Ausgestaltungen sind in den von diesen abhängigen Patentansprüchen wiedergegeben, welche jeweils für sich genommen oder in Kombination miteinander einen Aspekt der Erfindung darstellen können.

Gemäß dem Anspruch 1 ist eine Ballenwickelvorrichtung für eine Ballenpresse, insbesondere für eine Rundballenpresse, zum Umhüllen von Ballen mit Wickelmaterial, insbesondere aus Erntegut, vorgesehen, welche einen Wickeltisch zur Aufnahme eines Ballens sowie wenigstens einen bahnförmiges Wickelmaterial tragenden Wickelarm aufweist, wobei der Wickeltisch und/oder der wenigstens eine Wickelarm um eine Ebene des Rundballens rotierend antreibbar sind. Die Ballenwickelvorrichtung ist gekennzeichnet durch eine Steuer- und Regeleinheit, die dazu eingerichtet ist, die die Wickelgeschwindigkeit bestimmende Antriebsgeschwindigkeit des Wickeltisches und/oder des wenigstens einen Wickelarmes in Abhängigkeit von zumindest einem die Dauer des Wickelprozesses beeinflussenden Prozessparameter zu manipulieren. Mittels der Steuer- und Regeleinheit lässt sich zeitnah auf eine während des Wickelprozesses auftretende Betriebssituation reagieren, welche in Folge einer Prozessparameteränderung zu einer Verzögerung der Fertigstellung des Ballens führen würde. Die von der Steuer- und Regeleinheit einleitbaren Maßnahmen führen zu einer Fertigstellung des Ballens zumindest annähernd innerhalb der regulären Wickeldauer.

Insbesondere kann die Steuer- und Regeleinheit dazu eingerichtet sein, die Antriebsgeschwindigkeit der Aktuatorik des wenigstens einen Wickelarmes und/oder des Wickeltisches in Abhängigkeit von dem verwendeten Wickelmaterial auf einen maximal zulässigen Wert zu erhöhen. Hierzu kann vorgesehen sein, dass für verschiedene Wickelmaterialien materialspezifische Informationen in der Steuer- und Regeleinheit hinterlegt sind, welche einen Rückschluss auf die maximale Wickelgeschwindigkeit zulassen.

Vorzugsweise kann die Steuer- und Regeleinheit mit zumindest einem einen Prozessparameter überwachenden Sensor in Verbindung stehen. Durch die Anordnung eines oder mehrerer Sensoren können die die Dauer des Wickelprozesses beeinflussenden Prozessparameter kontinuierlich überwacht und von der Steuer- und Regeleinheit ausgewertet werden. Anhand dieser Auswertung kann die Steuer- und Regeleinheit zumindest eine geeignete Maßnahme bestimmen, welche als Reaktion auf eine Prozessparameteränderung einzuleiten ist, um die Wickeldauer innerhalb der regulären Wickeldauer, d.h. ohne Prozessparameteränderung, zu halten.

So kann zumindest ein Drehzahlsensor zur Überwachung der Antriebsgeschwindigkeit des Wickeltisches und/oder des wenigstens einen Wickelarmes vorgesehen sein. Durch den Drehzahlsensor kann die Einhaltung der maximalen, von den spezifischen Eigenschaften des jeweils verwendeten Wickelmateriales abhängigen Antriebsgeschwindigkeiten sichergestellt werden.

Erfindungsgemäß ist zumindest ein Sensor zur Bestimmung einer Restmenge des auf zumindest einer Rolle aufgewickelten Wickelmaterials an dem wenigstens einen Wickelarm vorgesehen. Die Bestimmung der Restmenge des Wickelmaterials auf der oder den Rollen an dem wenigstens einen Wickelarm ermöglicht es der Steuer- und Regeleinheit frühzeitig Maßnahmen einzuleiten, um die Wickeldauer innerhalb der regulären Wickeldauer zu halten beziehungsweise eine Unterbrechung des Wickelprozesses nach Möglichkeit zu verhindern.

Dabei kann jeder Rolle zumindest ein nach einem optischen und/oder einem mechanischen Messprinzip arbeitender Sensor zur Überwachung und/oder Bestimmung des Durchmessers zugeordnet sein. Zur Bestimmung der Restmenge des Wickelmaterials auf einer Rolle kann eine sensorische Überwachung des Durchmessers des auf der Rolle befindlichen Wickelmaterials vorgenommen werden. Die kontinuierliche Überwachung des Durchmessers ermöglicht es der Steuer- und Regeleinheit zu bestimmen, ob noch Wickelmaterial auf der jeweiligen Rolle vorhanden ist bzw. deren verbleibende Restlauflänge. Des Weiteren kann ein Vergleich der jeweiligen Restlauflänge des Wickelmateriales der an den Wickelarmen angeordneten Rollen durch die Steuer- und Regeleinheit durchgeführt werden. Auf Grundlage dieses Vergleichs kann ein Geschwindigkeitsprofil zum Antreiben der Wickelarme bestimmt werden, welches berücksichtigt, dass die Restlauflänge des Wickelmateriales auf einer der Rollen kürzer ist, so dass diese während des Wickelprozesses zu Ende geht. In einem solchen Fall kann die Antriebsgeschwindigkeit der Wickelarme bereits erhöht werden, bevor das Ende des Wickelmaterials auf der einen Rolle erreicht ist. Hierzu kann ein nach einem mechanischen Messprinzip arbeitender Sensor als ein Taster ausgeführt sein. Der Taster kann in radialer Richtung durch Kontaktieren des Wickelmaterials auf der Rolle dessen Restemenge bestimmen. Ein optischer Sensor kann beispielsweise in Form einer Kamera oder eines Lasers ausgeführt sein. Der optische Sensor kann in axialer Richtung an einem Ende des Wickelmaterials dessen Stärke und/oder Höhe sowie den Durchmesser auf der Rolle erfassen. Darüber hinaus lässt sich durch einen optischen Sensor das Reißen des Wickelmaterials auf einfache Weise detektieren.

Eine vorteilhafte Ausgestaltung sieht vor, dass die Steuer- und Regeleinheit mit einer externen Steuereinrichtung verbunden ist, welche Feldmanagementdaten an die Steuer- und Regeleinheit überträgt. Durch die Bereitstellung von Feldmanagementdaten kann die Steuer- und Regeleinheit bestimmen, ob ein verbleibender Fahrweg bis zum Erreichen eines Vorgewendes ausreicht, um mit regulärer Wickelgeschwindigkeit den in Bearbeitung befindlichen Ballen fertigzustellen oder ob die Wickelgeschwindigkeit, d.h. die Antriebsgeschwindigkeit des wenigstens einen Wickelarmes und/oder des Wickeltisches erhöht werden müssen, um vor Erreichen des Vorgewendes oder eines Feldendes den Ballen auf dem Feld anlegen zu können.

Besonders zweckmäßig ist es, wenn die Steuer- und Regeleinheit dazu eingerichtet ist, die Wickelgeschwindigkeit während des Wickelvorganges kontinuierlich anzupassen. Hierdurch kann eine gleichmäßige Belastung des jeweiligen Wickelmaterials sowie eine im Wesentlichen gleiche Vorstreckung des Wickelmateriales während des gesamten Wickelprozesses gewährleistet werden.

Insbesondere kann dem wenigstens einen Wickelarm jeweils eine Aktuatorik zum Antreiben zugeordnet sein. Die Aktuatorik kann als hydraulischer oder elektrischer Antrieb ausgebildet sein. Vorzugsweise können Hydraulikmotoren zum Antreiben des wenigstens einen Wickelarmes und des Wickeltischs zum Einsatz kommen.

Dabei kann die Steuer- und Regeleinheit dazu eingerichtet sein, die jeweilige Aktuatorik zum Antreiben des wenigstens einen Wickelarmes und des Wickeltisches unabhängig voneinander zu regeln. Im Bedarfsfall kann nur die Drehzahl des wenigstens einen Wickelarmes erhöht werden, während die Rotationsgeschwindigkeit des vom Wickeltisch angetriebenen Ballens unverändert bleibt.

Darüber hinaus wird die eingangs gestellte Aufgabe durch ein Verfahren zum Betreiben einer Ballenwickelvorrichtung für ein Ballenpresse, insbesondere Rundballenpresse, zum Umhüllen von Ballen, insbesondere aus Erntegut, gelöst, welche einen Wickeltisch sowie wenigstens einen Wickelarm aufweist, mit der der Ballen mit Wickelmaterial umhüllt wird, wozu der Wickeltisch und/oder der wenigstens eine Wickelarm um eine Ebene des Rundballens rotierend angetrieben werden, indem die die Wickelgeschwindigkeit bestimmende Antriebsgeschwindigkeit des Wickeltisches und/oder des wenigstens einen Wickelarmes in Abhängigkeit von zumindest einem die Dauer des Wickelprozesses beeinflussenden Prozessparameter geregelt wird.

Vorzugsweise kann als ein Prozessparameter die zur Verfügung stehende Bearbeitungszeit verwendet werden.

Weiterhin kann als ein Prozessparameter eine spezifische Eigenschaft des auf einer Rolle befindlichen Wickelmaterials verwendet werden. Die Reißfestigkeit des Wickelmaterials bestimmt die Vorstreckung sowie die maximale Antriebsgeschwindigkeit des wenigstens einen Wickelarmes und/oder des Wickeltisches. Weitere Prozessparameter können das Vorhandensein von Wickelmaterial, die Anzahl von Wickelmaterial tragenden Rollen, das Reißen des Wickelmaterials oder die verbleibende Restlauflänge des Wickelmaterials auf einer Rolle sein.

Vorzugsweise kann die Wickelgeschwindigkeit während des Wickelvorganges kontinuierlich angepasst werden. Somit wird eine gleichmäßige Belastung des jeweiligen Wickelmaterials sowie eine im Wesentlichen gleiche Vorstreckung des Wickelmateriales während des gesamten Wickelprozesses gewährleistet.

Es ist von besonderem Vorteil, wenn die Antriebsgeschwindigkeit des wenigstens einen Wickelarmes und des Wickeltisches unabhängig voneinander geregelt werden kann.

Dabei kann das Wickelmaterial in radialer und/oder axialer Richtung sensorisch überwacht werden. Auf diese Weise kann neben dem Durchmesser des auf der Rolle befindlichen Wickelmaterials auch frühzeitig ein Einreißen des Wickelmateriales festgestellt werden.

Die Erfindung ist in den angehängten Ansprüchen beschrieben. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung sowie aus den Zeichnungen, in denen ein Ausführungsbeispiel der Erfindung vereinfacht dargestellt ist. Es zeigen:
- Fig. 1: eine Seitenansicht einer als Rundballenpresse mit einer Ballenwickelvorrichtung ausgeführten Press-Wickelkombination;
- Fig. 2: eine Teilansicht eines eine Rolle mit Wickelmaterial tragenden Wickelarmes;
- Fig. 3: eine Gegenüberstellung zweier Funktionsverläufe;
- Fig. 4: ein Flussdiagramm zur Veranschaulichung des Wickelprozesses.

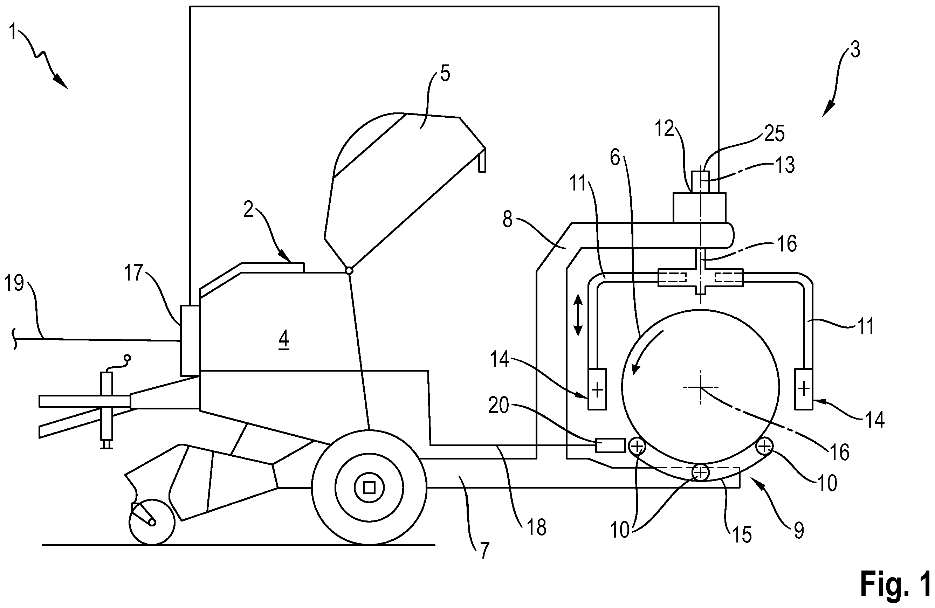

Fig. 1 zeigt in einer Seitenansicht eine aus einer Ballenpresse 2 und einer Ballenwickelvorrichtung 3 bestehende Press-Wickelkombination 1. Ein vorderer Teil der Ballenpresse 2 ist von einer Presskammer 4 eingenommen. Die Presskammer 4 formt zugeführtes Erntegut zu einem zylindrischen Ballen 6. Dazu nimmt die Rundballenpresse 2 Erntegut über eine für sich gesehen bekannte und daher nicht gezeigte Aufnahmeeinrichtung auf, die sich, bezogen auf die Längsrichtung der Ballenpresse 2, frontseitig an der Ballenpresse 2, und somit vor der Presskammer 4, befindet. Sobald der in der Presskammer 4 geformte Ballen 6 eine gewünschte Größe erreicht hat, wird dieser aus der Presskammer 4 durch eine von einer Ausgabeklappe 5 freigegebene Öffnung an die der Presskammer 4 nachgeordnete Ballenwickelvorrichtung 3 übergeben. Der mittels der Ballenpresse 2 erzeugte Ballen 6, der im Wesentlichen die Form eines geraden Kreiszylinders hat, gelangt auf einen Wickeltisch 9. Die Ausgabeklappe 5 am Heck der Presskammer 4 ist in ihrer offenen Stellung gezeigt, um den fertigen Ballen 6 auf den Wickeltisch 9 der hinter der Presskammer 4 angeordneten Ballenwickelvorrichtung 3 auszugeben.

Der Wickeltisch 9 umfasst zumindest zwei drehbar gelagerte Walzen 10 sowie mehrere, um die Walzen 10 herumgeschlungene, den Ballen 6 unterstützende Bänder 15. Indem zumindest eine der Walzen 10 drehangetrieben wird, kann der Ballen 6 um seine horizontale Symmetrieachse 16 in Drehung versetzt werden. Der Antrieb der wenigstens einen Walze 10 erfolgt durch eine als Hydraulikmotor 20 ausgebildete Aktuatorik. Der Hydraulikmotor 20 steht zu seiner Ansteuerung durch eine weitere Steuer- und Signalleitung 18 mit einer Steuer- und Regeleinheit 17 in Wirkverbindung.

Ein Ausleger 8 ist zwischen der Presskammer 4 und dem Wickeltisch 9 an einem Trägerrahmen 7 der Ballenpresse 2 angeordnet und erstreckt sich mit seinem horizontal verlaufenden Armabschnitt in der Seitenansicht bis über den Wickeltisch 9. An dem freien Ende des Armabschnitts des Auslegers 8 sind zwei Wickelarme 11, angetrieben von einem Hydraulikmotor 12, um eine mittig durch den Ballen 4 verlaufende vertikale Achse 13 drehbar montiert. Anstelle von Hydraulikmotoren ist auch die Verwendung von Elektromotoren als Aktuatorik zum Antreiben von Wickelarmen 11 und Walze 10 denkbar. Die Ballenwickelvorrichtung 3 kann auch mit nur einem Wickelarm 11 oder mehr als zwei Wickelarmen 11 ausgeführt sein.

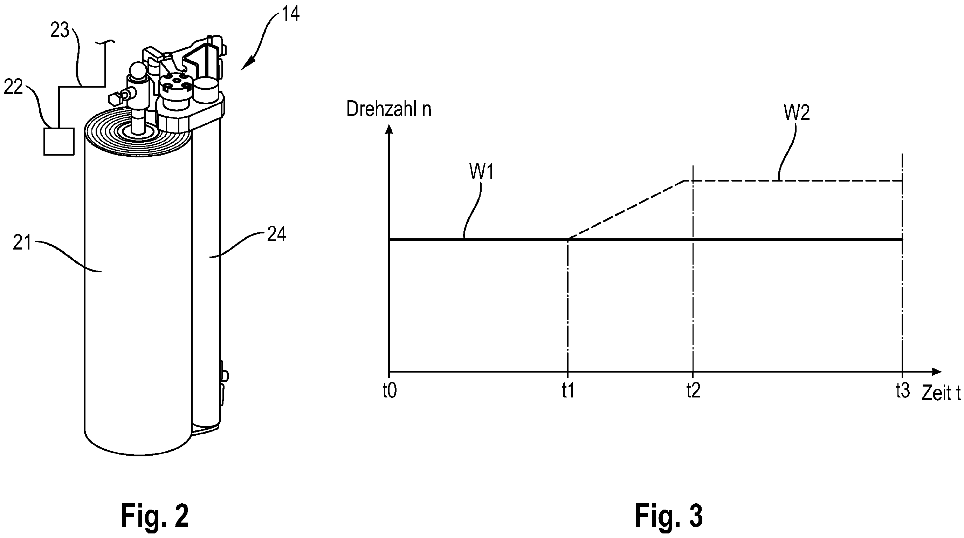

Die Wickelarme 11 weisen jeweils einen Wickelmaterialträger 14 zur Aufnahme von um den Ballen 6 zu wickelnder Kunststofffolie auf. Hierzu ist auf den jeweiligen Wickelmaterialträger 14 zumindest eine Folienrolle 21 aufbringbar, wie in Fig. 2 dargestellt. Der jeweilige Wickelarm 11 umfasst weiterhin, wie ebenfalls der Figur 2 zu entnehmen ist, eine grundsätzlich bekannte, als Vorstrecker 24 bezeichnete Einrichtung, um das bahnförmige, von dem Wickelmaterialträger 14 abgewickelte Wickelmaterial während des Umwickelns des Ballens 6 mit einer Vorspannung zu beaufschlagen. Die Vorspannung ist in Abhängigkeit von dem zu verarbeitenden Wickelmaterial einstellbar. Zum Schneiden des bahnförmigen Wickelmaterials nach erfolgter Umwicklung des Ballens 6 ist dem jeweiligen Wickelarm eine hydraulisch betätigbare Klemmschere zugeordnet.

Das Umwickeln des Ballens 6 erfolgt durch die Rotation der Wickelarme 11 in einer Ebene um den Ballen 6 herum, so dass dieser gleichzeitig von dem bahnförmigen Wickelmaterial umwickelt wird. Durch die zusätzliche Rotation des Ballens 6 um seine Symmetrieachse 16, die mittels der Walzen 10 und der diese umgebenden Bänder 15 auf diesen übertragen wird, wird ein vollständiges Einwickeln des Ballens 6 erreicht.

Die Press-Wickelkombination 1 umfasst, wie zuvor angegeben, die Steuer- und Regeleinheit 17, die durch eine Steuer- und Signalleitung 18 mit dem die die Wickelarme 11 drehbar antreibenden Motor 12 verbunden ist. Durch die Steuer- und Signalleitung 18 werden vom Hydraulikmotor 12 bzw. einem diesem zugeordneten Drehzahlsensor 25 die Drehzahl der Wickelarme 11 repräsentierende Signale an die Steuer- und Regeleinheit 17 übertragen. Die Steuer- und Regeleinheit 17 ist dazu eingerichtet, die Antriebsdrehzahl des Hydraulikmotors 12 sowie des die Walze 10 antreibenden Hydraulikmotors 20 mittels geeigneter Signale zu variieren. Mit dem Bezugszeichen 19 ist eine als Datenbus ausgeführte Zuleitung bezeichnet, welche die Steuer- und Regeleinheit 17 mit einer Steuerungsvorrichtung eines landwirtschaftlichen Traktors verbindet.

Die Darstellung in Fig. 2 zeigt eine Teilansicht eines der Wickelmaterialträger 14, der eine Folienrolle 21 mit einem bahnförmigen Wickelmaterial trägt. Der Wickelmaterialträger 14 weist zumindest einen Sensor 22 auf, welcher der Überwachung des Abwickelvorganges des Wickelmaterials von der Folienrolle 21 dient. Der Sensor 22 erfasst kontinuierlich den Außendurchmesser der Folienrolle 21, dessen Veränderung beim Abwickeln einen Rückschluss auf das verbleibende Wickelmaterial auf der jeweiligen Folienrolle 21 zulässt. Das Ende des Wickelmaterials auf der Folienrolle 21 lässt sich somit ebenfalls detektieren. Zur sensorischen Überwachung der jeweiligen Folienrolle 21 kann der zumindest eine Sensor 22 als ein nach einem optischen oder mechanischen Messprinzip arbeitender Sensor ausgeführt sein. Die messtechnische Erfassung erfolgt dabei in radialer und/oder axialer Richtung der Folienrolle 21. Der Sensor 22 ist durch eine Signalleitung 23 mit der Steuer- und Regeleinheit 17 verbunden, welche die von dem Sensor 22 bereitgestellten, den aktuellen Außendurchmesser repräsentierenden Signale auswertet. Auf Grundlage dieser Auswertung erfolgt eine Ansteuerung der Aktuatorik zum Antreiben der Wickelarme 11 und der zumindest einen Walze 10 des Wickeltisches 9.

Die Dauer des Umwickelns eines Ballens 6 beziehungsweise die Wickelgeschwindigkeit, mit der der Ballen 6 umwickelt wird, wird von unterschiedlichen Prozessparametern beeinflusst. Hierzu zählen unter anderem die Drehgeschwindigkeit der Wickelarme 11 sowie die Rotationsgeschwindigkeit des Ballens 6 respektive die Antriebsgeschwindigkeit der zumindest einen angetriebenen Walze 10 des Wickeltischs 9. Weitere Prozessparameter, die die Wickelgeschwindigkeit beeinflussen, sind unmittelbar von dem zu verarbeitenden Wickelmaterial abhängig. So beeinflussen die Anzahl an Rollen 21 mit Wickelmaterial, die Restmenge an Wickelmaterial auf der jeweiligen Folienrolle 21, das Erreichen des Wickelmaterialendes auf einer der Rollen 21, das Reißen des von einer der Rollen 21 abgewickelten Wickelmaterials während des Wickelprozesses wie auch die Materialbeschaffenheit des Wickelmaterials, welches die maximal zulässige Drehzahl der Wickelarme 11 vorgibt, die Geschwindigkeit des Wickelprozesses und dessen Dauer. Darüber hinaus kann die für das Umwickeln des Ballens 6 zur Verfügung stehende Bearbeitungszeit, beispielsweise die verbleibende Zeit bis zum Erreichen des Feldendes, Einfluss auf die Wickelgeschwindigkeit nehmen. Um den Prozess des Wickelns zu optimieren, lässt sich die Wickeldauer zum Einwickeln eines Ballens 6 in Abhängigkeit von zumindest einem Prozessparameter steuern oder regeln, in dem die Steuer- und Regeleinheit 17 die Antriebsdrehzahl der Wickelarme 11 und/oder der angetriebenen Walze 10 des Wickeltisches 9 verändert, insbesondere erhöht, wird. Das Erhöhen der Antriebsgeschwindigkeit erfolgt dabei stets unter Berücksichtigung der Materialeigenschaften des zu verarbeitenden Wickelmaterials.

Veranschaulicht wird diese Prozessoptimierung anhand zweier in Fig. 3 beispielhaft einander gegenübergestellten Funktionsverläufen W1 und W2. Der Funktionsverlauf W1 gibt die jeweilige Wickeldauer eines Ballens ohne ein die Wickeldauer beeinflussendes Ereignis wieder. Der Funktionsverlauf W2 gibt die Wickeldauer mit einem den Wickelprozess beeinflussenden Ereignis, hier dem Ausgehen des Wickelmaterials auf einer der beiden Rollen 21, über den Drehzahlverlauf der von dem Hydraulikmotor 12 angetriebenen Wickelarme 11 wieder.

Im Zeitpunkt t0 ist der Drehzahlverlauf der Aktuatorik konstant. Im Zeitpunkt t1 wird durch den der jeweiligen Folienrolle 21 zugeordneten Sensor 22 ein Signal an die Steuer- und Regeleinheit 17 gesandt, dass das verbleibende Wickelmaterial auf einer der beiden Rollen 21 auf den Wickelmaterialträgern 14 nicht ausreicht, um den Wickelprozess bis zum Ende fortzuführen. Dies hätte zur Folge, dass das notwendige Wickelmaterial für den Abschluss des Wickelprozesses von der verbleibenden Folienrolle 21 abgewickelt werden muss. Würde gemäß dem aus dem Stand der Technik bekannten Verfahren mit konstanter Antriebsdrehzahl gearbeitet, so würde der Ballen 6 nur mit der halben Wickelgeschwindigkeit umwickelt werden, was mit einer zeitlichen Verlängerung des Wickelprozesses einhergeht. Um diesem aus dem Stand der Technik bekannten Nachteil entgegenzuwirken, steuert die Steuer- und Regeleinrichtung 17 den Hydraulikmotor 12 als Reaktion auf die Auswertung des Durchmessersignales derart an, dass die Antriebsdrehzahl der Wickelarme 11 auf eine für das Abwickeln des jeweiligen Wickelmateriales maximal zulässige Antriebsdrehzahl der Wickelarme 11 erhöht wird. Somit wird bereits bis zum Erreichen des Zeitpunktes t2, an welchem das Wickelmaterial der einen Folienrolle 21 zu Ende geht, mit einer gegenüber dem regulären Betrieb der Wickelvorrichtung 3 erhöhten Antriebsdrehzahl gearbeitet. Bis zum Abschluss des Wickelprozesses wird die erhöhte Antriebsdrehzahl der Wickelarme 11 beibehalten, um die Umwicklung möglichst innerhalb der regulären Wickeldauer abschließen zu können, welche ohne eine derartige Beeinflussung unter gewöhnlichen Umständen, das heißt bei einer niedrigeren Drehzahl und zwei Wickelmaterial spendenden Rollen 21, erreichbar ist.

Weiterhin kann die Antriebsdrehzahl der Wickelarme 11 und/oder der zumindest einen angetriebenen Walze 10 des Wickeltisches 9 erhöht werden, wenn das Reißen des von einer Folienrolle 21 abgegebenen Wickelmateriales durch den Sensor 22 festgestellt wird. Ab dem Zeitpunkt des Reißens des Wickelmateriales werden der Hydraulikmotor 12 zum Antrieb der Wickelarme 11 und/oder der Hydraulikmotor 20 der Walze 10 von der Steuer- und Regeleinheit 17 derart angesteuert, dass die Wickelarme 11 mit ihrer für das zu verarbeitende Wickelmaterial maximal zulässigen Drehzahl rotieren. Damit lässt sich die Gesamtdauer des Wickelprozesses an die eines normalen Wickelprozesses annähern.

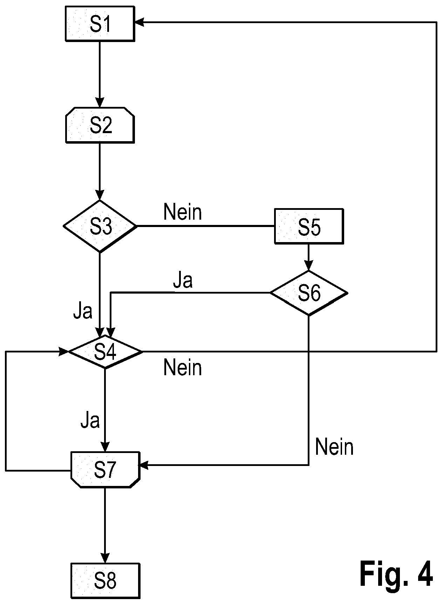

Das Verfahren zum Betreiben der Press-Wickelkombination 1 wird nachstehend anhand eines in Fig. 4 dargestellten Flussdiagramms veranschaulicht. Mit einem ersten Schritt S1 beginnt die Inbetriebnahme der Press-Wickelkombination 1, welche unter anderem die Einstellung von spezifischen Parametern umfasst, welche aus dem zu verarbeitenden Wickelmaterial resultieren. Hierbei handelt es sich insbesondere um einen Parameter, der die Quantität des Vorspannens durch die Vorstrecker 24 bestimmt. Im zweiten Schritt S2 beginnt der Wickelvorgang anhand der voreingestellten Wickelparameter. Die Aktuatorik treibt die Wickelarme 11 und die Walze 10 mit einer konstanten Drehzahl an, woraus eine definierte Dauer eines Wickelzyklus, innerhalb dessen Wickelmaterial von den beiden Rollen 21 abgewickelt und um den Ballen 6 gewickelt wird, resultiert. Mit dem zweiten Schritt S2 beginnen die kontinuierliche Überwachung der Außendurchmesser der das Wickelmaterial tragenden Rollen 22 sowie das Vorhandensein von Wickelmaterial mittels der Sensorik 22.

In einem dritten Schritt S3 wertet die Steuer- und Regeleinheit 17 die Signale des der jeweiligen Folienrolle 21 zugeordneten Sensors 22 aus. Dabei wird anhand des sensorisch erfassten Außendurchmessers der jeweiligen Folienrolle 21 ein Abgleich durchgeführt, ob die Menge an Wickelmaterial auf den Rollen 21 gleich ist. Für den Fall, dass die Wickelmaterialmengen annähernd gleich sind, wird mit einem vierten Schritt S4 fortgefahren, in welchem das Vorhandensein des Wickelmaterials überwacht wird.

Wird bei der Auswertung durch die Steuer- und Regeleinheit 17 im dritten Schritt S3 festgestellt, dass die Materialmengen auf den beiden Folienrollen 21 differieren, beispielsweise weil zu Beginn des Press- und Wickelvorganges die Wickelarme 11 mit Folienrollen 21 bestückt wurden, von denen eine bereits in Gebrauch gewesen ist, während die andere neu ist, wird im nachfolgenden fünften Schritt S5 die Restmenge an Wickelmaterial bzw. das voraussichtliche Wickelmaterialende der Folienrolle 21 durch die Steuer- und Regeleinheit 17 bestimmt.

Im sechsten Schritt S6 wird durch die Steuer- und Regeleinheit 17 bestimmt, ob die verbleibende Wickelmenge der Folienrolle 21 mit geringerem Außendurchmesser zur Fertigstellung eines in Bearbeitung befindlichen Ballens 6 innerhalb des definierten Wickelzyklus', d.h. bei einem Antrieb der Wickelarme 11 mit konstanter Antriebsdrehzahl, ausreicht. Die Bestimmung des Endes des Wickelmaterials gemäß dem fünften Schritt S5 wie auch die Bestimmung, ob die verbleibende Wickelmaterialmenge zur Fertigstellung des Ballens 6 ausreicht, gemäß dem sechsten Schritt S6, lassen sich anhand von Faktoren wie dem Durchmesser des zu umwickelnden Ballens, der prozentualen Überlappung des Wickelmaterials beim Wickeln sowie der voreingestellten Vorstreckung bestimmen. Wird in dem sechsten Schritt S6 festgestellt, dass die Restmenge an Wickelmaterial auf der einen Folienrolle 21 ausreicht, um den aktuell in Bearbeitung befindlichen Ballen zu umwickeln, bevor das Wickelmaterial erschöpft ist, wird mit dem vierten Schritt S4 fortgefahren.

In dem Fall, dass in dem sechsten Schritt S6 festgestellt wird, dass die Wickelmaterialmenge der einen Folienrolle 21 nicht ausreicht, um den in Bearbeitung befindlichen Ballen 6 vor dem Ende des Wickelzyklus vollständig zu umwickeln, wird in einem siebten Schritt S7 die die Wickelgeschwindigkeit bestimmende Antriebsgeschwindigkeit der Wickelarme 11 und/oder des Wickeltisches 9 erhöht. Diese Anpassung der Antriebsgeschwindigkeit durch die Variation der Drehzahlen der Wickelarme 11 und/oder der Walze 10 kann zu Beginn des Wickelns eines Ballens 6 oder auch während des laufenden Wickelvorganges erfolgen. Somit wird erreicht, dass der Ballen 6, obwohl im Verlauf des Wickelzyklus eine der beiden Folienrollen 21 leer läuft, dieser dennoch innerhalb oder nahezu innerhalb des definierten Wickelzyklus fertiggestellt wird.

Wird in dem Schritt S4 das Reißen des von einer der beiden Folienrollen 21 abgewickelten Wickelmaterials durch die Sensorik 22 festgestellt, so wird die Drehzahl der Wickelarme 11 und/oder der Walze 10 des Wickeltisches 9 erhöht, um die Restdauer des Wickelzyklus so kurz wie möglich zu halten. Die maximal einstellbare Drehzahl der Wickelarme 11 ist abhängig von den Eigenschaften des verwendeten Wickelmaterials.

In einem achten Schritt S8 wird von der Steuer- und Regeleinheit 17 eine Ausgabe generiert, welche in Form eines Hinweises oder einer Fehlermeldung auf einer Anzeigeeinheit des die Press-Wickelkombination antreibenden Schleppers oder Traktors angezeigt wird. Hierbei kann es sich um einen Hinweis an eine Bedienperson des landwirtschaftlichen Traktors handeln, mit welchem auf die Drehzahlerhöhung auf Grund beispielsweise des bevorstehenden Endes des Wickelmateriales auf einer der Folienrollen 21 hingewiesen wird. Des Weiteren kann im Fall des Reißens des Wickelmaterials, zusätzlich zu dem Hinweis auf die Änderung der Drehzahl, ein zusätzlicher Warnhinweis gegeben werden.

Wie weiter oben bereits angedeutet, kann auch die für das Umwickeln des Ballens 6 zur Verfügung stehende Bearbeitungszeit Einfluss auf die Wickelgeschwindigkeit nehmen. Diese lässt sich dadurch bestimmen, dass die Steuer- und Regeleinheit 17 durch die als Datenbus ausgeführt Zuleitung 19 mit einer Steuerungsvorrichtung eines die Press-und Wickelkombination 1 ziehenden Schleppers oder Traktors verbunden ist. Moderne Traktoren verfügen in der Regel über Positionsortungssysteme (GPS oder dergleichen), welche eine exakte Positionsbestimmung auf einem zu bearbeitenden Feld erlauben. Somit ist auch die Dauer bis zum Erreichen eines Feldendes beziehungsweise eines Vorgewendes mittels des Positionsortungssystems bestimmbar. Diese Information kann von der Steuerungsvorrichtung des Schleppers an die Steuer- und Regeleinheit 17 übermittelt werden, welche diese Information auswertet. Führt diese Auswertung durch die Steuer- und Regeleinheit 17 zu dem Ergebnis, dass die verbleibende Wegstrecke beziehungsweise Fahrdauer nicht ausreicht, um den Ballen 6 vor dem Erreichen des Feldendes bzw. des Vorgewendes vollständig zu umwickeln, lässt sich die Aktuatorik von Wickelarmen 11 und/oder Walze 10 derart ansteuern, dass diese mit einer höheren Drehzahl angetrieben werden, um den Ballen 6 vor dem Erreichen des Feldendes bzw. des Vorgewendes vollständig zu umwickeln und auf dem Feld ablegen zu können.

**Bezugszeichenliste**

| | | | |
|---|---|---|---|
| 1 | Press-Wickelkombination | S1 | Erster Schritt |
| 2 | Ballenpresse | S2 | Zweiter Schritt |
| 3 | Wickelvorrichtung | S3 | Dritter Schritt |
| 4 | Presskammer | S4 | Vierter Schritt |
| 5 | Ausgabeklappe | S5 | Fünfter Schritt |
| 6 | Rundballen | S6 | Sechster Schritt |
| 7 | Trägerrahmen | S7 | Siebter Schritt |
| 8 | Ausleger | S8 | Achter Schritt |
| 9 | Wickelvorrichtung | | |
| 10 | Walze | | |
| 11 | Wickelarm | | |
| 12 | Hydraulikmotor | | |
| 13 | Achse | | |
| 14 | Wickel materialträger | | |
| 15 | Band | | |
| 16 | Symmetrieachse von 6 | | |
| 17 | Steuer- und Regeleinheit | | |
| 18 | Steuer- und Signalleitung | | |
| 19 | Zuleitung | | |
| 20 | Hydraulikmotor | | |
| 21 | Folienrolle | | |
| 22 | Sensor | | |
| 23 | Signalleitung | | |
| 24 | Vorstrecker | | |
| 25 | Drehzahlsensor | | |
| | | | |
| | | | |
| | | | |
| | | | |
| | | | |

## Patentansprüche

1. Ballenwickelvorrichtung (3) für eine Ballenpresse (2), insbesondere Rundballenpresse, umfassend einen Wickeltisch (9) zur Aufnahme eines Ballens (6) sowie wenigstens einen bahnförmiges Wickelmaterial tragenden Wickelarm (11), wobei der Wickeltisch (9) und/oder der wenigstens eine Wickelarm (11) um eine Ebene des Rundballens (6) rotierend antreibbar sind, **dadurch gekennzeichnet, dass** die Ballenwickelvorrichtung (3) eine Steuer- und Regeleinheit (17) umfasst, die dazu eingerichtet ist, die die Wickelgeschwindigkeit bestimmende Antriebsgeschwindigkeit der Wickelarme (11) und/oder des Wickeltisches (9) in Abhängigkeit von zumindest einer Restmenge des auf zumindest einer Rolle (21) aufgewickelten Wickelmaterials zu manipulieren, wobei die Restmenge des Wickelmaterials ein die Dauer des Wickelprozesses beeinflussender Prozessparameter ist, wobei zumindest ein Sensor (22) zur Bestimmung einer Restmenge des auf zumindest einer Rolle (21) aufgewickelten Wickelmaterials an dem wenigstens einen Wickelarm (11) vorgesehen ist, wobei die von der Steuer- und Regeleinheit (17) eingeleiteten Maßnahmen zu einer Fertigstellung des Ballens (6) zumindest annähernd innerhalb der regulären Wickeldauer führen.

2. Ballenwickelvorrichtung (3) nach Anspruch 1, **dadurch gekennzeichnet, dass** die Steuer- und Regeleinheit (17) mit zumindest einem einen Prozessparameter überwachenden Sensor (22) in Verbindung steht.

3. Ballenwickelvorrichtung (3) nach einem der Ansprüche 1 oder 2, **dadurch gekennzeichnet, dass** zumindest ein Drehzahlsensor (25) zur Überwachung der Drehgeschwindigkeit des Wickeltisches (9) und/oder des wenigstens einen Wickelarme (11) vorgesehen ist.

4. Ballenwickelvorrichtung (3) nach Anspruch 1, **dadurch gekennzeichnet, dass** jeder Rolle zumindest ein nach einem optischen und/oder mechanischen Messprinzip arbeitender Sensor (22) zur Überwachung des Durchmessers zugeordnet ist.

5. Ballenwickelvorrichtung (3) nach einem der Ansprüche 1 bis 4, **dadurch gekennzeichnet, dass** die Steuer- und Regeleinheit (17) mit einer externen Steuereinrichtung verbunden ist, welche Feldmanagementdaten an die Steuer- und Regeleinheit (17) überträgt.

6. Ballenwickelvorrichtung (3) nach einem der Ansprüche 1 bis 5, **dadurch gekennzeichnet, dass** die Steuer- und Regeleinheit (17) dazu eingerichtet ist, die Wickelgeschwindigkeit während des Wickelvorganges kontinuierlich anzupassen.

7. Ballenwickelvorrichtung (3) nach einem der Ansprüche 1 bis 5, **dadurch gekennzeichnet, dass** dem wenigstens einen Wickelarm (11) und dem Wickeltisch (9) jeweils eine Aktorik (12, 20) zum Antreiben zugeordnet ist.

8. Ballenwickelvorrichtung (3) nach Anspruch 7, **dadurch gekennzeichnet, dass** die Steuer- und Regeleinheit (17) dazu eingerichtet ist, die jeweilige Aktuatorik (12, 20) zum Antreiben des wenigstens einen Wickelarmes (11) und des Wickeltisches (9) unabhängig voneinander zu regeln.

9. Verfahren zum Betreiben einer Ballenwickelvorrichtung (3) für eine Ballenpresse, insbesondere Rundballenpresse, zum Umhüllen von Ballen (6), insbesondere aus Erntegut, welche einen Wickeltisch (9) sowie wenigstens einen Wickelarm (11) umfasst und den Ballen (6) mit bahnförmigem Wickelmaterial umhüllt, wozu der Wickeltisch (9) und/oder der wenigstens eine Wickelarm (11) um eine Ebene des Ballens (6) rotierend angetrieben werden, **dadurch gekennzeichnet, dass** die die Wickelgeschwindigkeit bestimmende Antriebsgeschwindigkeit des Wickeltisches (9) und/oder des wenigstens einen Wickelarmes (11) in Abhängigkeit von zumindest einer Restmenge des auf zumindest einer Rolle (21) aufgewickelten Wickelmaterials geregelt wird, wobei die Restmenge des Wickelmaterials ein die Dauer des Wickelprozesses beeinflussender Prozessparameter ist, wobei zumindest ein Sensor (22) zur Bestimmung einer Restmenge des auf zumindest einer Rolle (21) aufgewickelten Wickelmaterials an dem wenigstens einen Wickelarm (11) vorgesehen ist, wobei die von der Steuer- und Regeleinheit (17) eingeleiteten Maßnahmen zu einer Fertigstellung des Ballens (6) zumindest annähernd innerhalb der regulären Wickeldauer führen.

10. Verfahren nach Anspruch 9, **dadurch gekennzeichnet, dass** als ein zusätzlicher Prozessparameter die zur Verfügung stehende Bearbeitungszeit verwendet wird.

11. Verfahren nach einem der Ansprüche 9 oder 10, **dadurch gekennzeichnet, dass** als ein zusätzlicher Prozessparameter eine spezifische Eigenschaft des auf einer Rolle (21) befindlichen Wickelmaterials verwendet wird.

12. Verfahren nach einem der Ansprüche 9 bis 11, **dadurch gekennzeichnet, dass** die Wickelgeschwindigkeit während des Wickelvorganges kontinuierlich angepasst wird.

13. Verfahren nach einem der Ansprüche 9 bis 12, **dadurch gekennzeichnet, dass** die Antriebsgeschwindigkeit des wenigstens einen Wickelarmes (11) und des Wickeltisches (9) unabhängig voneinander geregelt wird.

14. Verfahren nach einem der Ansprüche 9 bis 13, **dadurch gekennzeichnet, dass** das Wickelmaterial in radialer und/oder axialer Richtung sensorisch überwacht wird.

## Claims

1. A bale wrapping apparatus (3) for a bale press (2), in particular a round bale press, including a wrapping table (9) for receiving a bale (6) and at least one wrapping arm (11) carrying a wrapping material in web form, wherein the wrapping table (9) and/or the at least one wrapping arm (11) are drivable in rotation about a plane of the round bale (6), **characterised in that** the bale wrapping apparatus (3) includes an open-loop and closed-loop control unit (7) adapted to manipulate the drive speed, that determines the wrapping speed, of the wrapping arm (11) and/or the wrapping table (9) in dependence on at least a residual amount of the wrapping material wound on at least one roll (21), wherein the residual amount of the wrapping material is a process parameter influencing the duration of the wrapping process, wherein there is provided at least one sensor (22) for determining a residual amount of the wrapping material wound on at least one roll (21) at the at least one wrapping arm (11), wherein the measures initiated by the open-loop and closed-loop control unit (17) lead to finishing of the bale (6) at least approximately within the regular wrapping duration.

2. A bale wrapping apparatus (3) according to claim 1 **characterised in that** the open-loop and closed-loop control unit (17) is connected to at least one sensor (22) monitoring a process parameter.

3. A bale wrapping apparatus (3) according to one of claims 1 and 2 **characterised in that** there is provided at least one rotary speed sensor (25) for monitoring the speed of rotation of the wrapping table (9) and/or the at least one wrapping arm (11).

4. A bale wrapping apparatus (3) according to claim 1 **characterised in that** associated with each roll is at least one sensor (22) for monitoring the diameter, operating in accordance with an optical and/or mechanical measurement principle.

5. A bale wrapping apparatus (3) according to one of claims 1 to 4 **characterised in that** the open-loop and closed-loop control unit (17) is connected to an external control device which transmits field management data to the open-loop and closed-loop control unit (17).

6. A bale wrapping apparatus (3) according to one of claims 1 to 5 **characterised in that** the open-loop and closed-loop control unit (17) is adapted to continuously adapt the wrapping speed during the wrapping process.

7. A bale wrapping apparatus (3) according to one of claims 1 to 5 **characterised in that** associated with the at least one wrapping arm (11) and the wrapping table (9) is a respective actuator means (12, 20) for driving same.

8. A bale wrapping apparatus (3) according to claim 7 **characterised in that** the open-loop and closed-loop control unit (17) is adapted to control the respective actuator means (12, 20) for driving the at least one wrapping arm (11) and the wrapping table (9) independently of each other.

9. A method of operating a bale wrapping apparatus (3) for a bale press, in particular a round bale press, for enclosing bales (6), in particular of crop material, which includes a wrapping table (9) and at least one wrapping arm (11) and encloses the bale (6) with wrapping material in web form, for which purpose the wrapping table (9) and/or the at least one wrapping arm (11) are driven in rotation about a plane of the bale (6), **characterised in that** the drive speed, determining the wrapping speed, of the wrapping table (9) and/or the at least one wrapping arm (11) is controlled in dependence on at least a residual amount of the wrapping material wound on at least one roll (21), wherein the residual amount of the wrapping material is a process parameter influencing the duration of the wrapping process, wherein there is provided at least one sensor (22) for determining a residual amount of the wrapping material wound on at least one roll (21) at the at least one wrapping arm (11), wherein the measures initiated by the open-loop and closed-loop control unit (17) lead to finishing of the bale (6) at least approximately within the regular wrapping duration.

10. A method according to claim 9 **characterised in that** the available processing time is used as an additional process parameter.

11. A method according to one of claims 9 and 10 **characterised in that** a specific property of the wrapping material disposed on a roll (21) is used as an additional process parameter.

12. A method according to one of claims 9 to 11 **characterised in that** the wrapping speed is continuously adapted during the wrapping operation.

13. A method according to one of claims 9 to 12 **characterised in that** the drive speed of the at least one wrapping arm (11) and the wrapping table (9) are controlled independently of each other.

14. A method according to one of claims 9 to 13 **characterised in that** the wrapping material is monitored by sensor means in the radial and/or axial direction.

## Revendications

1. Dispositif d'enrubannage de balles (3) pour une presse à balles (2), en particulier une presse à balles rondes, comprenant une table d'enrubannage (9) pour recevoir une balle (6) ainsi qu'au moins un bras d'enrubannage (11) portant du matériau d'enrubannage en forme de bande, la table d'enrubannage (9) et/ou le au moins un bras d'enrubannage (11) étant entraînables en rotation autour d'un plan de la balle ronde (6), **caractérisé en ce que** le dispositif d'enrubannage de balles (3) comprend une unité de commande et de régulation (17) qui est agencée pour agir sur la vitesse d'entraînement, déterminante pour la vitesse d'enrubannage, des bras d'enrubannage (11) et/ou de la table d'enrubannage (9) en fonction d'au moins une quantité résiduelle de matériau d'enrubannage enroulé sur au moins un rouleau (21), la quantité résiduelle du matériau d'enrubannage étant un paramètre de processus influant sur la durée du processus d'enrubannage, au moins un capteur (22) étant prévu pour déterminer une quantité résiduelle du matériau d'enrubannage enroulé sur au moins un rouleau (21) sur le au moins un bras d'enrubannage (11), les mesures prises par l'unité de commande et de régulation (17) conduisant à un achèvement de la balle (6) au moins approximativement dans les limites de la durée d'enrubannage admise.

2. Dispositif d'enrubannage de balles (3) selon la revendication 1, **caractérisé en ce que** l'unité de commande et de régulation (17) est connectée à au moins un capteur (22) surveillant un paramètre de processus.

3. Dispositif d'enrubannage de balles (3) selon une des revendications 1 ou 2, **caractérisé en ce qu'**au moins un capteur de vitesse de rotation (25) est prévu pour surveiller la vitesse de rotation de la table d'enrubannage (9) et/ou du au moins un bras d'enrubannage (11).

4. Dispositif d'enrubannage de balles (3) selon la revendication 1, **caractérisé en ce qu'**à chaque rouleau est associé au moins un capteur (22) fonctionnant selon un principe de mesure optique et/ou mécanique pour surveiller le diamètre.

5. Dispositif d'enrubannage de balles (3) selon une des revendications 1 à 4, **caractérisé en ce que** l'unité de commande et de régulation (17) est connectée à un équipement de commande externe qui transfère des données de gestion de champ à l'unité de commande et de régulation (17).

6. Dispositif d'enrubannage de balles (3) selon une des revendications 1 à 5, **caractérisé en ce que** l'unité de commande et de régulation (17) est agencée pour adapter en continu la vitesse d'enrubannage pendant l'opération d'enrubannage.

7. Dispositif d'enrubannage de balles (3) selon une des revendications 1 à 5, **caractérisé en ce qu'**au au moins un bras d'enrubannage (11) et à la table d'enrubannage (9) est associé respectivement un ensemble actionneur (12, 20) destiné à l'entraînement.

8. Dispositif d'enrubannage de balles (3) selon la revendication 7, **caractérisé en ce que** l'unité de commande et de régulation (17) est agencée pour réguler indépendamment l'un de l'autre les ensembles actionneurs respectifs (12, 20) destinés à entraîner le au moins un bras d'enrubannage (11) et la table d'enrubannage (9).

9. Procédé de fonctionnement d'un dispositif d'enrubannage de balles (3) pour une presse à balles, en particulier une presse à balles rondes, destinée à envelopper des balles (6), en particulier en produit récolté, laquelle comprend une table d'enrubannage (9) ainsi qu'au moins un bras d'enrubannage (11) et enveloppe la balle (6) avec du matériau d'enrubannage en forme de bande, à cet effet la table d'enrubannage (9) et/ou le au moins un bras d'enrubannage (11) étant entraînés en rotation autour d'un plan de la balle (6), **caractérisé en ce que** la vitesse d'entraînement, déterminante pour la vitesse d'enrubannage, de la table d'enrubannage (9) et/ou du au moins un bras d'enrubannage (11) est régulée en fonction d'au moins une quantité résiduelle du matériau d'enrubannage enroulé au moins un rouleau (21), la quantité résiduelle du matériau d'enrubannage étant un paramètre de processus influant sur la durée du processus d'enrubannage, au moins un capteur (22) étant prévu pour déterminer une quantité résiduelle du matériau d'enrubannage enroulé sur au moins un rouleau (21) sur le au moins un bras d'enrubannage (11), les mesures prises par l'unité de commande et de régulation (17) conduisant à un achèvement de la balle (6) au moins approximativement dans les limites de la durée d'enrubannage admise.

10. Procédé selon la revendication 9, **caractérisé en ce que** le temps de traitement disponible est utilisé comme paramètre de processus supplémentaire.

11. Procédé selon une des revendications 9 ou 10, **caractérisé en ce qu'**une propriété spécifique du matériau d'enrubannage se trouvant sur un rouleau (21) est utilisée comme paramètre de processus supplémentaire.

12. Procédé selon une des revendications 9 à 11, **caractérisé en ce que** la vitesse d'enrubannage est adaptée en continu pendant l'opération d'enrubannage.

13. Procédé selon une des revendications 9 à 12, **caractérisé en ce que** les vitesses d'entraînement du au moins un bras d'enrubannage (11) et de la table d'enrubannage (9) sont régulées indépendamment l'une de l'autre.

14. Procédé selon une des revendications 9 à 13, **caractérisé en ce que** le matériau d'enrubannage est surveillé par des capteurs dans les directions radiale et/ou axiale.
